# EUROPÄISCHE PATENTANMELDUNG

(11) **EP 3 498 796 A1**
(43) Veröffentlichungstag der Anmeldung: **19.06.2019**
(21) Anmeldenummer: 18210889.4
(22) Anmeldetag: 06.12.2018
(51) Int. Cl.: C09J 5/06, C09J 7/35

(54) **VERFAHREN ZUR STEIGERUNG DER VERANKERUNGSKRAFT BEI DER BESCHICHTUNG EINES TRÄGERS MIT EINER LÖSUNGSMITTELFREIEN KLEBEMASSE DURCH OBERFLÄCHLICHE TRÄGERERHITZUNG MITTELS KONTAKTFLÄCHENWÄRMEÜBERTRAG**

(30) Priorität: 18.12.2017 DE 102017223003
(71) Anmelder: tesa SE, 22848 Norderstedt (DE)
(72) Erfinder: SCHABERNACK, Thomas, 77955 Ettenheim (DE); BECHT, Oliver, 79199 Kirchzarten (DE); ZAGERMANN, Markus, 77716 Haslach (DE); VOGT, Gerhard, 77704 Oberkirch (DE); HOELGER, Christof-Gottfried, 79576 Weil am Rhein (DE)

(57) **Zusammenfassung**

Ein Verfahren zur Herstellung eines Klebebands mittels Beschichten einer lösungsmittelfreien Klebemasse auf ein bahnförmiges Trägermaterial, bei dem unmittelbar vor dem Beschichten der Klebemasse auf das Trägermaterial die Oberfläche der Klebemasse oder die Oberfläche des Trägermaterials oder die Oberfläche sowohl der Klebemasse als auch des Trägermaterials durch Einbringen von Wärme auf eine Temperatur von mindestens 30°C oberhalb der Prozesstemperatur erhitzt wird, bewirkt, dass die Klebemasse auf dem Träger deutlich besser verankert wird. Für ein so hergestelltes Klebeband kann eine Steigerung der Verankerungskraft um bis zum 60 % erreicht werden. Das Eindringen der Masse in insbesondere raue Träger kann unter den Bedingungen der hohen Temperaturen sehr viel leichter erfolgen und ist mittels der Temperaturführung steuerbar.

## Beschreibung

Die vorliegende Erfindung betrifft ein Verfahren zur Herstellung eines Klebebands mittels Beschichten einer lösungsmittelfreien Klebemasse auf ein bahnförmiges Trägermaterial.

Die Beschichtung solcher lösungsmittelfreien Klebemassen, auch Hotmelts genannt, auf Trägermaterialien, insbesondere auf raue Trägermaterialien wie Gewebe, Vliese oder Papierträger mit Hilfe von entsprechenden Auftragsverfahren via Düse oder mit Hilfe der Kalandertechnologie ist bekannt. Dabei kann es, insbesondere bei der Verwendung von hochviskosen Klebemassen, zu Verankerungs- und Übertragungsproblemen der Klebemasse auf dem bzw. auf das Trägermaterial kommen. Die Folge davon sind anwendungs- und verfahrenstechnische Nachteile, z.B. Klebemasserückstände und/oder fehlender Übertrag auf den Träger. Daraus folgt, dass das Material nur unter erheblichen Schwierigkeiten weiterverarbeitet werden kann bzw. nicht den Kundenanforderungen genügt. Für die oben genannten Beschichtungsverfahren sind die Temperaturen der Masse und des Trägers wichtige Prozessgrößen, die sich ebenfalls auf die Produkteigenschaften auswirken. Die Temperatur der Masse wird wesentlich durch die Temperatur der Masselinie bestimmt, die nicht beliebig hoch gewählt werden kann, da es andernfalls zu Schädigungen der Masse kommt. Ähnliches gilt für den Träger, der im Prozess zwar vorgewärmt werden kann. Die Trägertemperaturen müssen jedoch ebenfalls so niedrig gewählt werden, dass der Träger nicht geschädigt wird. Eine solche Temperaturerhöhung der gesamten Masse kommt beispielsweise in der US2011/0183100 A1 zum Einsatz. Auch die US2017/0298255 A1 beschreibt zwecks besserer Verankerung eine Erwärmung von Träger und Klebemasse. Allerdings kommt es aufgrund der Art der Wärmezufuhr mittels Infrarotwärmequelle oder durch eine interne Wärmequelle auch hier zu einer Temperaturerhöhung nicht nur an der Oberfläche.

Um eine für eine gute Klebmasseübertragung und Verankerung ausreichende Eindringtiefe der Klebmasse in den Träger zu erreichen, ist es daher bekannt, die Klebemasse nachträglich in den Träger einzupressen. Dieser Prozess ist aber störanfällig und erfordert zusätzliche und spezielle Vorrichtungen.

Aufgabe der vorliegenden Erfindung war es daher, ein Verfahren zur Verfügung zu stellen, bei dem die Übertragung eines Hotmelts auf insbesondere raue Oberflächen und die Verankerung auf der Oberfläche verbessern ist. Auf einen weiteren Arbeitsgang sollte man dabei möglichst verzichten können.

Erfindungsgemäß wird diese Aufgabe bei einem Verfahren der eingangs genannten Art dadurch gelöst, dass unmittelbar vor dem Beschichten der Klebemasse auf das Trägermaterial die Oberfläche der Klebemasse oder die Oberfläche des Trägermaterials oder die Oberfläche sowohl der Klebemasse als auch des Trägermaterials durch Einbringen von Wärme auf eine Temperatur von mindestens 30°C oberhalb der Prozesstemperatur erhitzt wird.

Durch diese oberflächliche Erhitzung der Masse und/oder des Trägers weit oberhalb der üblichen Prozesstemperaturen vor dem Erstkontakt der Masse mit dem Träger im Auftragswerk wird erreicht, dass die Klebemasse auf dem Träger deutlich besser verankert wird. Es kann eine Steigerung der Verankerungskraft um bis zum 60 % erreicht werden. Das Eindringen der Masse in den rauen Träger kann unter den Bedingungen der hohen Temperaturen sehr viel leichter erfolgen und ist mittels der Temperaturführung steuerbar.

Eine Erhitzung erfolgt jedoch tatsächlich nur an der Oberfläche und nur für kurze Zeit. Die Kühlung und das notwendige schnelle Absenken der Temperaturen unter die kritischen Werte erfolgt sehr schnell und effektiv durch die Ausbreitung der Wärme in das Innere des Trägers und der Masse, sodass eine Schädigung des Materials, auch an der Oberfläche, nicht erfolgt und die effektive Erhöhung der Temperaturen in der Prozesslinie moderat ist.

Die Erhitzung der Oberfläche erfolgt auf eine Temperatur von mindestens 30°C oberhalb der Prozesstemperatur. Vorzugsweise erfolgt eine Erhöhung von mindestens 50°C, besonders bevorzugt von mindestens 70°C und insbesondere von mindestens 100°C oberhalb der Prozesstemperatur. Weiterhin ist es bevorzugt, wenn die Erhöhung der Temperatur der Oberfläche der Klebemasse oder der Oberfläche des Trägermaterials oder der Oberfläche sowohl der Klebemasse als auch des Trägermaterials durch Einbringen von Wärme maximal 200°C, vorzugsweise höchstens 150°C, insbesondere höchstens 120°C oberhalb der Prozesstemperatur beträgt, da so eine Beschädigung von Träger und/oder Klebemasse vermieden werden kann.

Mit dem erfindungsgemäßen Verfahren können Produkte hergestellt werden, die mit herkömmlicher Hotmelttechnologie nicht oder nur schwierig hergestellt werden können. Insbesondere kann auch mit empfindlichen Materialien, wie hitzeaktivierbaren oder hitzeempfindlichen Klebmassen, beschichtet werden.

Vorzugsweise erfolgt das Beschichten über Extrusionsdüsen oder insbesondere über ein Kalanderwerk. Ein Beschichten mittels Walzenbeschichtungsauftragswerken oder Mehrwalzen-Beschichtungskalandern, die aus vorzugsweise drei, besonders bevorzugt aus vier Beschichtungswalzen bestehen, wobei die Selbstklebemasse bei Durchgang durch einen oder mehrere Walzenspalte vor Übergabe auf das bahnförmige Material auf die gewünschte Dicke geformt wird, wird besonders dann bevorzugt, wenn die Viskositäten der Selbstklebemasse Werte von 5000 Pa.s bei einem Schergefälle von 1 rad/s übersteigt.

Ferner kann im Beschichtungsprozess mit dem Kalanderverfahren die Temperaturführung den Masseübertrag von der Kalanderwalze auf den Träger günstig beeinflussen und so das Prozessfenster insbesondere auch in Richtung niedrigerer Temperaturen erweitern, sodass insbesondere auch Anfahrverluste reduziert werden können.

In einer besonders bevorzugten Ausführungsform der vorliegenden Erfindung erfolgt das Erhitzen mittels Wärmeleitung oder Konvektion (Heißluft), vorzugsweise durch Methoden der Kontaktflächenwärmeübertragung mittels Heizwalzen, Heizelementen oder durch eine Kombination der zuvor erwähnten Methoden. Insbesondere ein Erhitzen mittels Heißluft beispielsweise ist auf einfache Art möglich, ohne dass spezielle Vorrichtungen zum Einsatz kommen müssen.

Besonders gute Ergebnisse lassen sich erzielen, wenn das Einbringen der Wärme weniger als 100 ms, vorzugsweise weniger als 70 ms, insbesondere weniger als 50 ms, vor dem Beschichten der Klebemasse auf das Trägermaterial, also sehr kurz vor dem Kontakt im Auftragswerk, erfolgt. So wird vermieden, dass die Oberfläche durch den schnellen Wärmeabfluss in das Materialinnere nicht ausreichend heiß ist, also schon wieder abgekühlt ist, bevor es zu einer Verankerung der Klebemasse auf dem Trägermaterial kommt.

Die Prozesstemperatur für die Beschichtung liegt besonders geeigneter Weise im Bereich von 10°C bis 160°C, vorzugsweise im Bereich von 20°C bis 150°C, besonders bevorzugt im Bereich von 35°C bis 120°C, insbesondere im Bereich von 50°C bis 100°C. Auf Walzenbeschichtungsauftragswerken oder Mehrwalzen-Beschichtungskalandern ist eine Beschichtung bei Temperaturen unterhalb von 100°C möglich, so dass auch Selbstklebemassen beschichtet werden können, die thermisch aktivierbare Vernetzer enthalten. Als Prozesstemperatur wird dabei diejenige Temperatur verstanden, die das Trägermaterial ohne zusätzliche Wärmeapplikation laut des beschriebenen Verfahrens hätte.

Dabei beträgt die Oberflächentemperatur des Beschichtungskalanders vorzugsweise weniger als 180 °C, insbesondere von 170 °C bis 110°C.

Zum Zwecke erhöhter Gasblasenfreiheit der beschichteten Klebemasse kann vor dem Auftragswerk eine Vakuumentgasung, zum Beispiel eine Vakuumkammer oder ein Entgasungsextruder, vorgesehen sein.

Als Trägermaterialien sind je nach Verwendungszweck des Klebebandes alle bekannten Träger, gegebenenfalls mit entsprechender chemischer oder physikalischer Oberflächenvorbehandlung der Streichseite sowie antiadhesiver physikalischer Behandlung der Rückseite, geeignet. Dabei kommen insbesondere Gewebe, Gewirke, Vliese, Schaumstoffe und Papier, gekreppt oder ungekreppt, in Frage, wobei die Gewebe, Gewirke und Vliese aus einer oder mehreren Naturfasern, aus einer oder mehreren Kunstfasern oder aus einer Mischung von Natur- und Kunstfasern bestehen. Schaumstoffe können beispielsweise aus Polyethylen oder Polyurethan bestehen.

Die vorliegende Erfindung findet bei der Verarbeitung von Hotmelt-Klebemassen, insbesondere solcher auf Basis nicht-thermoplastischer Elastomere, Anwendung.

Vorteilhafterweise ist das nicht-thermoplastische Elastomer gewählt aus der Gruppe der Naturkautschuke oder der Synthesekautschuke oder es besteht aus einem beliebigen Blend aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den nicht-thermoplastischen Elastomeren zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil. Stellvertretend genannt seien an dieser Stelle vor allem die besonders verträglichen Styrol-Isopren-Styrol- (SIS) und Styrol-Butadien-Styrol (SBS) -Typen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (von Nostrand, 1989) sei ausdrücklich hingewiesen.

Als Weichmacher können alle aus der Klebebandtechnologie bekannten weichmachenden Substanzen eingesetzt werden. Dazu zählen unter anderem die paraffinischen und naphthenischen Öle, (funktionalisierte) Oligomere wie Oligobutadiene, -isoprene, flüssige Nitrilkautschuke, flüssige Terpenharze, pflanzliche und tierische Öle und Fette, Phthalate, funktionalisierte Acrylate.

Zum Zwecke der thermisch induzierten chemischen Vernetzung sind bei dem erfindungsgemäßen Verfahren alle vorbekannten thermisch aktivierbaren chemischen Vernetzer wie beschleunigte Schwefel- oder Schwefelspendersysteme, Isocyanatsysteme, reaktive Melamin-, Formaldehyd und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.

Auf das Ergebnis des erfindungsgemäßen Verfahrens hat auch die Geschwindigkeit des Beschichtens einen Einfluss. Geeigneter Weise erfolgt das Beschichten in einer Arbeitsgeschwindigkeit im Bereich von 5 m/min bis 300 m/min, vorzugsweise zwischen 10 m/min bis 100 m/min und insbesondere zwischen 10 m/min bis 70 m/min.

Die vorliegende Erfindung betrifft ferner ein Klebeband, das nach dem erfindungsgemäßen Verfahren erhalten wird, wobei die Klebemasse zumindest einseitig auf das Trägermaterial beschichtet wird. Bei einem erfindungsgemäßen Klebeband kann durch die kurzzeitige Temperaturerhöhung kurz vor dem Beschichten erreicht werden, dass die Viskosität der Klebemasse erniedrigt und die Fließfähigkeit der Masse drastisch erhöht wird. Daraus resultiert eine größere Eindringtiefe der Klebemasse in den Träger, wodurch die Verankerungskraft der Klebemasse auf dem Träger erhöht wird.

Die Eigenschaften der Klebemasse wie beispielsweise Vernetzungsgrad, Klebkraft und kohäsive Eigenschaften werden durch die kurzzeitige Erhitzung nicht beeinflusst, sondern bleiben unverändert.

Besonders günstiger Weise liegt die Dicke der lösungsmittelfreien Klebemassenschicht bei dem erfindungsgemäßen Klebeband im Bereich von 10 µm bis 2000 µm, vorzugsweise von 15 µm bis 1000 µm und insbesondere von 20 µm bis 500 µm.

### Ausführungsbeispiele

### Prüfmethoden

### Verankerungskraft

Gemäß Prüfmethode J0PMC013 wird die Verbundfestigkeit einer Klebemasse mit dem Träger getestet.

### Scherstandzeit (Statischer Schertest SSZ)

Ein rechteckiges Prüfmuster der Größe 13 mm x 20 mm des zu prüfenden doppelseitigen Klebebandes wird zwischen zwei Stahlplättchen (50 mm x 25 mm x 2mm; Material nach DIN EN 10088-2, Typ 1, 4301, Oberflächenqualität 2R, kaltgewalzt und blankgeglüht, Ra = 25 - 75 nm) so verklebt, dass die Verklebungsfläche des Prüfmusters mit beiden Stahlplättchen je 260 mm² beträgt, die Stahlplättchen in Längsrichtung versetzt parallel ausgerichtet sind, so dass das Prüfmuster mittig zwischen ihnen verklebt ist und die Stahlplättchen auf unterschiedlichen Seiten über das Prüfmuster hinausragen. Anschließend wird für 1 min mit einem Anpressdruck von 100 N/cm² verpresst. Nach vorgegebener Aufziehzeit (sofern nicht anders angegeben, 72 Stunden bei Raumtemperatur) werden die so präparierten Prüfkörper mit dem einen über das Prüfmuster hinausragenden Stahlplättchenbereich an einem Schertestmessplatz derart aufgehängt, dass die Längsrichtung der Stahlplättchen nach unten ausgerichtet ist, und der über das Prüfmuster hinausragenden Bereich des anderen Stahlplättchens wird bei vorgegebener Temperatur mit einem gewählten Gewicht belastet (Messungen bei Raumtemperatur und mit 20 N Belastung sowie bei 70°C und mit 10 N Belastung; siehe Angaben in der jeweiligen Tabelle). Prüfklima: Standardbedingungen, 50 % rel. Feuchte. Eine automatische Zähleruhr ermittelt nun die Zeitdauer bis zum Versagen der Prüfmuster in min (Abfallen des belasteten Stahlplättchens).

### Klebkraft (KK) Stahl

Ein Streifen des zu untersuchenden (Haft-)Klebebandes wird in definierter Breite (Standard: 20 mm) auf einer geschliffenen Stahlplatte (rostfreier Stahl 302 nach ASTM A 666; 50 mm x 125 mm x 1,1 mm; glänzende geglühte Oberfläche; Oberflächenrauigkeit Ra = 50 ± 25 nm arithmetische Durchschnittsabweichung von der Basislinie) durch zehnmaliges Überrollen mittels einer 5 kg Stahlrolle verklebt. Doppelseitig klebende Klebebänder werden mit einer 36 µm dicken Hart-PVC-Folie rückseitig verstärkt. Jeweils identische Proben werden hergestellt und entweder für eine Sofortmessung bereitgestellt, 3 Tage gelagert und vermessen bzw. 14 Tage gelagert und vermessen.

Die präparierte Platte wird in das Prüfgerät eingespannt (fixiert) und der Klebestreifen über sein freies Ende an einer Zugprüfmaschine unter einem Schälwinkel von 90° mit einer Geschwindigkeit von 300 mm/min in Längsrichtung des Klebebandes von der Platte abgezogen. Die dafür notwendige Kraft wird ermittelt. Die Messergebnisse sind in N/cm angegeben (Kraft normiert auf die jeweils gelöste Verklebungsstrecke) und über drei Messungen gemittelt. Alle Messungen werden in einem klimatisierten Raum bei 23°C und 50 % relativer Luftfeuchte durchgeführt.

### Statische Glasübergangstemperatur T_{G}

Die Bestimmung der statischen Glasübergangstemperatur erfolgt über Dynamische Differenzkalorimetrie nach DIN 53765. Die Angaben zur Glasübergangstemperatur T_{G} beziehen sich auf den Glasumwandlungstemperatur-Wert T_{G} nach DIN 53765:1994-03, sofern im Einzelfall nichts anderes angegeben ist.

### Beispiele

Als Klebemasse für die Versuche wurde eine Kautschukklebemasse, hergestellt aus:
- 43,0 Gew.-% Naturkautschuk (Type SVR 3L)
- 51,0 Gew.-% Dertophene T 105 und
- 6,0 Gew.-% Wingtack 10,
verwendet. Die Herstellung erfolgte in einem Planetwalzenextruder mit drei Walzenzylindern, wobei jeder Walzenzylinder mit 6 Planetenspindeln bestückt war. Die Drehzahl der Zentralspindel wurde auf 100 Umdrehungen/min eingestellt. Aus den Komponenten wurde ein Premix hergestellt, der über einen volumetrisch arbeitenden Dosierer in den Füllteil des Planetwalzenextruders dosiert wurde. Die Temperierkreise für die Zentralspindel und das Füllteil waren wassergekühlt, jedes Walzenteil wurde mit 100°C beheizt. Die Masseaustrittstemperatur betrug 112°C.

### Grundlagenversuch im Labormaßstab (Laborkalander)

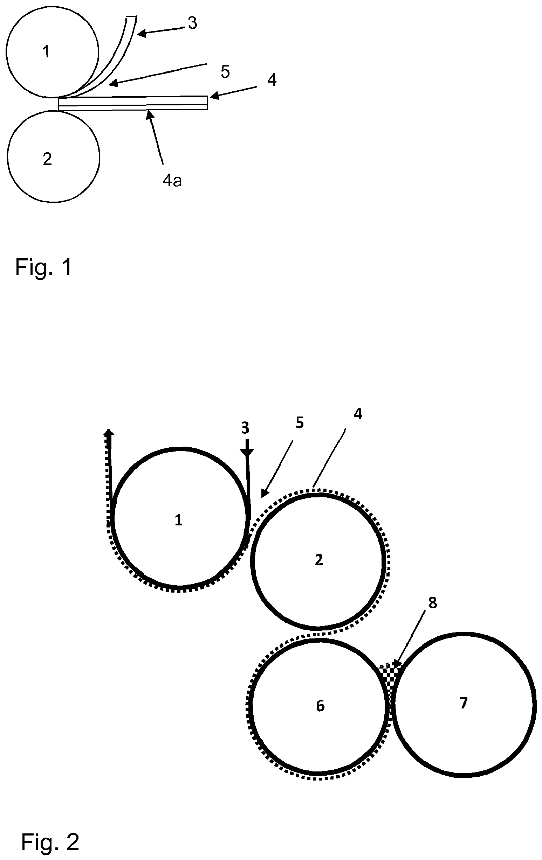

In diesem Experiment wurde die Kautschukklebemasse, ausgestrichen auf Trennpapier mit einem Masseauftrag von 100 g/m², mit einem Baumwollgewebe kalandriert. Die Kalandrierung wurde mit einem Laborkalander (2-Walzenbauart) durchgeführt. Der Laborkalander ist in Fig. 1 gezeigt. Der Kalander weist eine HNBR- (hydrierter Acrylnitrilbutadien-Kautschuk) Walze 1 sowie eine Stahlwalze 2 auf. In dem Kalanderspalt wird vor dem Erstkontakt der auf Trennpapier 4a ausgestrichenen Klebemasse 4 (100 g/m²) mit dem Baumwollgewebe 3 eine oberflächliche Erhitzung der Masse- und Gewebeoberfläche mittels Heißluft vorgenommen. Der Heißlufteintrag am Kalenderspalt ist mit 5 bezeichnet. Folgende Ergebnisse wurden für die Verankerungskraft (J0PMC013) erhalten.

**Tab. 1: Ergebnisse Grundlagenversuch**

| **Werte (n = 3) [N/cm]** | **Verankerungskraft [N/cm]** | | |
|---|---|---|---|
| **Druck [N/mm]** | **Ohne Heißluft** | **Mit Heißluft** | **Differenz N/cm mit/ohne Heißluft** |
| 100 | 8,7 | 14,9 | 6,2 |
| 50 | 7,9 | 13,8 | 5,9 |
| 10 | 5,7 | 11,8 | 6,1 |

**Tab. 2: Ergebnisse Reproduktionsexperiment- Grundlagenversuch**

| **Werte (n = 3) [N/cm]** | **Verankerungskraft [N/cm]** | | |
|---|---|---|---|
| **Druck [ N/mm]** | **Ohne Heißluft** | **Mit Heißluft** | **Differenz N/cm mit/ohne Heißluft** |
| 50 | 8,1 | 14,4 | 6,3 |

Um eine Eigenschaftsänderung der Kautschukklebemasse auszuschließen, wurden die Parameter Scherstandzeit, Klebkraft-Stahl und die statische Glasübergangstemperatur (T_{G}) untersucht.

**Tab. 3: Ergebnisse Analyse der Klebmasseeigenschaften nach Heißluftbehandlung**

| **Werte (n = 3) [N/cm]** | | | |
|---|---|---|---|
| **Prüfparameter** | **Ohne Heißluft** | **Mit Heißluft** | **Differenz N/cm mit/ohne Heißluft** |
| **Scherstandzeit [min]** | 856 | 1022 | 166 |
| **Klebkraft-Stahl [N/cm]** | 4,63 | 4,3 | -0,33 |
| **T_{G} [°C] bei 10 rad/s** | -4 | -5 | -1 |

Der Grundlagenversuch zeigt, dass sich mittels Erhitzung der Masse- und Gewebeoberfläche eine Steigerung der Verankerungskraft erzielen lässt. Im Rahmen der Versuche wurde für die Erhitzung Heißluft eingesetzt. Auch andere Verfahren zur Erhitzung sind denkbar. Des Weiteren konnte gezeigt werden, dass die Kautschukklebemasse durch die kurzzeitige Erhitzung nicht verändert wird, sondern relevante Parameter der Klebemasse im Rahmen der Messgenauigkeit unverändert bleiben.

### Scale-up: Heißluftversuche im Technologiezentrum

Nach den positiven Ergebnissen im Labormaßstab, wurden die erfindungsgemäßen Heißluftversuche unter Erhitzung von Kautschukklebemasse und Gewebeoberfläche im technischen Maßstab durchgeführt. Die Beschichtungsanlage ist schematisch in Fig. 2 gezeigt. Zwischen einer ersten Walze 7 und einer zweiten Walze 6 wird die Klebemasse 8 aus dem Extruder zu einer Schicht gewalzt. Über die Kalanderwalze 2, auf der sich die zu einer Schicht gewalzte Klebemasse 4 befindet, wird diese auf das Baumwollgewebe 3, das auf der Polymergegenwalze 1 läuft, beschichtet. Der Heißlufteintrag am Kalanderspalt ist mit 5 bezeichnet. Für die scale-up-Versuche wurde eine NRE-Klebemasse eingesetzt.

In der Tabelle 4 sind die Messergebnisse der Verankerungskraft nach einer siebentägigen Lagerung mit/ohne Heißluft bei verschiedenen Beschichtungsgeschwindigkeiten vergleichend wiedergegeben. Dabei zeigt sich, dass der Einfluss der Erhitzung bei geringeren Beschichtungsgeschwindigkeiten größer ist als bei höheren Geschwindigkeiten.

**Tab. 4: Vergleich Ergebnisse Klebmasseeigenschaften mit/ohne Heißluftbehandlung**

| **Werte (n=3) [N/cm]** | **Verankerungskraft [N/cm]** | | |
|---|---|---|---|
| **Geschwindigkeit [m/min]** | **Ohne Heißluft** | **Mit Heißluft** | **Differenz mit/ohne Heißluft** |
| 15 | 12 | 15,1 | 2,9 |
| 20 | 11,4 | 13 | 1,6 |
| 100 | 9,9 | 11 | 1,1 |

Der Versuch im Technologiezentrum hat gezeigt, dass sich das Prinzip der oberflächlichen Masse- und Gewebeerhitzung zur Steigerung der Verankerungskraft auch im größeren Maßstab anwenden lässt. Darüber hinaus konnte ein Geschwindigkeitseinfluss bei konstantem Energieeintrag durch beispielsweise Heißluft nachgewiesen werden.

## Patentansprüche

1. Verfahren zur Herstellung eines Klebebands mittels Beschichten einer lösungsmittelfreien Klebemasse auf ein bahnförmiges Trägermaterial (3), **dadurch gekennzeichnet, dass** unmittelbar vor dem Beschichten der Klebemasse (4) auf das Trägermaterial (3) die Oberfläche der Klebemasse (4) oder die Oberfläche des Trägermaterials (3) oder die Oberfläche sowohl der Klebemasse (4) als auch des Trägermaterials (3) durch Einbringen von Wärme (5) auf eine Temperatur von mindestens 30°C oberhalb der Prozesstemperatur erhitzt wird.

2. Verfahren nach Anspruch 1, **dadurch gekennzeichnet, dass** das Erhitzen mittels Wärmeleitung oder Konvektion (Heißluft), vorzugsweise durch Methoden der Kontaktflächenwärmeübertragung mittels Heizwalzen, Heizelementen oder durch eine Kombination der zuvor erwähnten Methoden, erfolgt.

3. Verfahren nach Anspruch 1 oder 2, **dadurch gekennzeichnet, dass** das Beschichten über Extrusionsdüsen oder insbesondere über ein Kalanderwerk erfolgt.

4. Verfahren nach einem der Ansprüche 1 bis 3, **dadurch gekennzeichnet, dass** das Einbringen der Wärme weniger als 100 ms, vorzugsweise weniger als 70 ms, insbesondere weniger als 50 ms, vor dem Beschichten der Klebemasse (4) auf das Trägermaterial (3) erfolgt.

5. Verfahren nach einem der Ansprüche 1 bis 4, **dadurch gekennzeichnet, dass** die Prozesstemperatur im Bereich von 10°C bis 160°C, vorzugsweise im Bereich von 20°C bis 150°C, besonders bevorzugt im Bereich von 35°C bis 120°C, insbesondere im Bereich von 50°C bis 100°C liegt.

6. Verfahren nach einem der Ansprüche 1 bis 5, **dadurch gekennzeichnet, dass** die Oberfläche der Klebemasse (4) oder die Oberfläche des Trägermaterials (3) oder die Oberfläche sowohl der Klebemasse (4) als auch des Trägermaterials (3) durch Einbringen von Wärme auf eine Temperatur von mindestens 50°C, vorzugsweise mindestens 70°C, insbesondere mindestens 100°C oberhalb der Prozesstemperatur erhitzt wird.

7. Verfahren nach einem der Ansprüche 1 bis 6, **dadurch gekennzeichnet, dass** die Oberfläche der Klebemasse (4) oder die Oberfläche des Trägermaterials (3) oder die Oberfläche sowohl der Klebemasse (4) als auch des Trägermaterials (3) durch Einbringen von Wärme auf eine Temperatur von höchstens 200°C, vorzugsweise höchstens 150°C, insbesondere höchstens 120°C oberhalb der Prozesstemperatur erhitzt wird.

8. Verfahren nach einem der Ansprüche 1 bis 7, **dadurch gekennzeichnet, dass** das Trägermaterial (3) ein Material, ausgewählt aus der Gruppe bestehend aus Geweben, Gewirken, Vliesen, Schaumstoffen und Papier, ist, wobei die Gewebe, Gewirke und Vliese aus einer oder mehreren Naturfasern, aus einer oder mehreren Kunstfasern oder aus einer Mischung von Natur- und Kunstfasern bestehen.

9. Verfahren nach einem der Ansprüche 1 bis 8, **dadurch gekennzeichnet, dass** das Beschichten in einer Arbeitsgeschwindigkeit im Bereich von 5 m/min bis 300 m/min, vorzugsweise zwischen 10 m/min bis 100 m/min, insbesondere zwischen 10 m/min bis 70 m/min, erfolgt.

10. Klebeband erhalten nach dem Verfahren nach einem der Ansprüche 1 bis 9, **dadurch gekennzeichnet, dass** die Klebemasse (4) zumindest einseitig auf das Trägermaterial (3) beschichtet wird.

11. Klebeband nach Anspruch 10, **dadurch gekennzeichnet, dass** die Dicke der lösungsmittelfreien Klebemassenschicht (4) im Bereich von 10 µm bis 2000 µm, vorzugsweise von 15 µm bis 1000 µm und insbesondere von 20 µm bis 500 µm liegt.
